# EUROPEAN PATENT APPLICATION

(11) **EP 4 657 625 A1**
(43) Date of publication of application: **03.12.2025**
(21) Application number: 24178158.2
(22) Date of filing: 27.05.2024
(51) Int. Cl.: H01M 50/209, H01M 50/507, H01M 50/517

(54) **A SPRING, CCU CARRIER AND A BATTERY SYSTEM**

(71) Applicant: Samsung SDI Co., Ltd., Yongin-si, Gyeonggi-do 17084 (KR)
(72) Inventor: Urbanitsch, Michael, 8074 Raaba-Grambsch (AT)
(74) Representative: Gulde & Partner

(57) **Abstract**

The present disclosure refers to a spring (100) for a battery system, including a main body (10) having a predefined thickness (T) including a first spring action side portion (12) and a second spring action side portion (14) opposite to the first spring action side portion (12) defining a spring action direction (A). The main body (10) includes a V-shaped opening (20, 20') including a plurality of leg openings (22, 22') penetrating the main body (10) in a thickness direction (y) of the main body (10), wherein the V-shaped opening (20, 20') is oriented so that the plurality of leg openings (22, 22') are symmetric with respect to a central axis (C) of the main body (10) that is parallel to the spring action direction (A). Further, the main body (10) further includes a pair of slot openings (30, 30') penetrating the main body (10) in the thickness direction (y), wherein the pair of slot openings (30, 30') respectively extend from opposite transversal side portions (16, 18) of the main body (10) toward the central axis (C).

Further, a cell contact unit, CCU, carrier (200), a battery system (1000) and a method of manufacturing the battery system is provided.

## Description

### Field of the Disclosure

The present disclosure relates to a spring for a battery system, a CCU carrier including the spring and a battery system including the CCU carrier. Further, the present disclosure relates to a method of manufacturing a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

A battery system according to the prior art, despite any modular structure, usually include a battery housing that serves as enclosure to seal the battery system against the environment and provides structural protection of the battery system's components. Housed battery system is usually mounted as a whole into its application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery system is expensive, large and heavy, the procedure proves burdensome and the storage, e.g. in the mechanic's workshop, of the bulky battery systems becomes difficult.

In battery systems and in the manufacturing processes thereof, springs may be used to support connection mechanism. Typical types of mechanical springs known in the prior art are leaf-, plate-, spiral- or S-shaped springs. However, these types of springs usually yield in several directions when not having an additional guidance.

Therefore, when using springs in battery systems as for example in cell contact units, CCU, carriers, novel types of springs need to be designed that cause a spring action that can overcome above shortcomings.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a spring for a battery system is provided. The spring includes a main body having a predefined thickness and including a first spring action side portion and a second spring action side portion opposite to the first spring action side portion defining a spring action direction. The main body includes at least one V-shaped opening. The at the lease one V-shaped opening includes a plurality of leg openings penetrating the main body in a thickness direction of the main body. The at least one V-shaped opening is oriented so that the plurality of leg openings are symmetric with respect to a central axis of the main body that is parallel to the spring action direction. The main body further includes a pair of slot openings penetrating the main body in the thickness direction, wherein the pair of slot openings respectively extend from opposite transversal side portions of the main body toward the central axis.

According to another aspect of the present disclosure, a CCU carrier for a battery system is provided. The CCU carrier includes a carrier member having a spring. The carrier member includes a clip member which is in mechanical communication with the spring so that the clip member yields through spring action of the spring during clipping.

According to another aspect of embodiment, a battery system includes a battery cell stack including a plurality of battery cells and at least one frame member coupled to the battery cell stack and including a plurality of frame openings. The battery system includes a plurality of CCU carriers clipped into respective frame openings of the at least one frame member by a first clip member that is in mechanical communication with a spring according to the above amendments, so that the first clip member yields through the spring action of the spring during clipping the carrier member into a respective opening.

According to an embodiment, a method of manufacturing a battery system includes a) providing a plurality of CCU carriers. The method includes the step of b) coupling a plurality of busbars to the CCU carrier. The method includes c) providing at least one frame member including a plurality of frame openings. The method further includes d) clipping the plurality of CCU carriers with the coupled busbars into respective frame openings so that the first clip member yields through the spring action of the spring during the clipping of the CCU carrier into a respective frame opening until arresting in the frame opening of the frame member. The method further includes the step of e) providing a battery cell stack including a plurality of battery cells. The method further includes the step of f) coupling the least one frame member including the clipped plurality of CCU carriers to at least one respective side of the battery cell stack.

According to another aspect of the embodiment, a vehicle including a battery system is provided.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view of a spring according to an embodiment,
- Fig. 2: illustrates a compression response of the spring according to an embodiment,
- Fig. 3: illustrates a force distribution in the spring in response to a compression according to an embodiment,
- Fig. 4: illustrates a CCU carrier for a battery system according to an embodiment of the invention,
- Fig. 5: illustrates a cross section of the CCU carrier for a battery system according to an embodiment of the invention,
- Fig. 6: illustrates a CCU carrier with for a battery system with a busbar according to an embodiment of the invention, and
- Fig. 7: illustrates a method for manufacturing a battery system according to an embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

### General Concept

According to one aspect of the present disclosure, a spring for a battery system and/or for a cell contact unit, CCU, carrier is provided. The spring includes a main body having a predefined thickness and including a first spring action side portion and a second spring action side portion opposite to the first spring action side portion defining a spring action direction. The main body includes at least one V-shaped opening. The at least one V-shaped opening includes a plurality of leg openings penetrating the main body in a thickness direction of the main body. The at least one V-shaped opening is oriented such that the plurality of leg openings are symmetric with respect to a central axis of the main body parallel to the spring action direction. The main body further includes a pair of slot openings penetrating the main body in the thickness direction, wherein the pair of slot openings respectively extend from opposite transversal side portions of the main body toward the central axis.

In other words, the main body may include a square or rectangular surface area having a uniform thickness. The main body may have cuboid shape. Then, the main body may be a flat main body where the thickness is shortest compared to a height direction (spring action direction) and a width direction (transversal direction). The pair of slot openings respectively extend from opposite transversal side portions of the main body toward the central axis while being spaced from each other to ensure connectivity of the spring. The first/second spring action side portions, or compression side portions, may be side portions that are configured to be compressed in response to a compression force and to store a restoring force in the spring. Thus, the spring may expand again in spring action direction upon releasing of the compression force. The transversal side portions may be side portions on adjacent side portions of the spring action side portions. The leg opening may define the straight parts of a V-shape that meet at a vertex or tip portion to define the V-shape.

The spring according to the above embodiment has excellent flexibility in the spring action direction allowing for a well-defined spring path length, i.e., compression depth, while maintaining stiffness in the transversal direction perpendicular to the spring action direction. The stiffness is achieved due to the V-shaped openings and the slot openings allowing for the flexibility in response to a compression force acting on the spring action side. Additionally, as a result, the spring has improved damping properties with homogeneous force distribution in the direction of the line of action of the force. Further, the spring has an advantage that only little space is required, for example, predefined thickness of less than 1 mm may be used. That is, the spring can maintain very flat and, therefore, can be integrated in a battery system in space saving manner. The space efficiency as well as the combination with flexibility while having stiffness in transversal direction makes the spring suitable for being integrated in a CCU carrier. Further, a spring as described above can be easily manufactured in an injection moulding process. In the compressed state, the slot openings and/or the V-shaped opening may close or shrink in response to compression which may define a maximum compression depth.

Another key aspect of the above spring is, in addition to the space savings compared to coil or leaf springs, the ability to individually adjust or set the spring constant, the spring travel path and the stiffness in the non-spring (orthogonal) direction. This is achieved by specifically adapting the shape features (e.g., length of leg openings, angle of leg openings) and/or the material thickness. This allows manufacturers and users to adapt the spring to different requirements and applications by precisely controlling the characteristics of the above spring and the described spring structures.

According to an embodiment, the pair of the slot openings respectively extend in a direction parallel to the plurality of leg openings of the at least one V-shaped opening. Thus, due to the symmetric arrangement, the force distribution over the spring, i.e., the main body can be improved. For example, hot spots of increased forces in the material of the spring may remain localized in response to a compression force acting on the spring.

According to embodiment, the pair of the slot openings respectively extend to overlap with the respective leg openings when viewed in spring action direction. This may facilitate flexibility, since the slot openings extend to overlap the leg openings of the V-shaped opening. Thus, the transversal side portions can slightly bend inwards to provide compression path length.

According to an embodiment, a length of at least one slot opening and/or at least one leg opening is a at least a quarter of an overall with between the opposite side portions of the main body. Flexibility may be enhanced by expanding the length of the at least two slot openings and/or leg opening and/or adjusted according to desired requirements.

According to an embodiment, the main body further includes a respective recessed portion on the transversal side portions and extending in spring action direction, wherein the pair of slot openings respectively extend toward the central axis from a slot start portion located within the recessed portion. The recessed portion facilitates that transversal side portions can slightly bend inwards to provide support for the compression of the spring.

According to an embodiment, an end portion on the transversal side portions of each recessed portion includes a curved portion. As well, this facilitates the response of the spring to provide a spring action and to slightly bend inwards to generated the spring path.

According to an embodiment, another end portion of the recessed portion is formed where the slot start portion is located. Thus, the angle before self-contact across the slot opening is larger which may increase the spring path length.

According to an embodiment, the main body includes a plurality of V-shaped openings and a plurality of pairs of slot openings which are positioned to alternate in the spring action direction. Thus, the spring path length can be increased while maintaining transversal stiffness in the same proportion.

According to an embodiment, the main body further includes a triangular opening located on the central axis and oriented symmetric with respect to the central axis. This triangular opening may increase stability and force distribution in the spring material.

According to an embodiment, the main body is made of a metal. For example, the metal may be made of steel. In other embodiments, the spring may be aluminum or steel alloy. This may improve rigidity of the spring.

According to an embodiment, the main body is made of plastic. This may simply the production of the spring.

According to an embodiment, the main body is a plastic that is formed by injection molding. Therefore, in comparison with springs for similar requirements the present spring offers a low-cost variant that can be manufactured in a simple manner by injection moulding. The spring relating to a novel V-shaped spring which can be manufactured from a plastic injection molded part with only one demolding direction locally.

According to an embodiment, a CCU carrier for a battery system is provided. The CCU carrier includes a carrier member including a spring according to the above embodiments. In addition, the carrier member further includes a first clip member which is in mechanical communication with the spring so that the first clip member yields (i.e. tilts or moves) in the spring action direction during clipping, i.e. a clipping process. In other words, the spring may facilitate or support the first clip member in yielding during a clipping. Thus, the CCU carrier can be clipped into a frame (metal frame) in an easier manner while saving space and, in addition, while proving transversal stiffness in conjunction with a desired spring effect.

According to an embodiment, the carrier member further includes a second clip member which extends in a transversal direction with respect to the spring action direction for retaining a busbar that is coupled to the carrier member. Thus, since the spring maintains stiff in the transversal direction even if compressed, the busbar may be fixedly held in place even during clipping.

According to an embodiment, a battery system is provided which includes a spring according to the above embodiments. All the above technical effects translate as well to a battery system including such spring.

According to an embodiment, the battery system is provided which includes a battery cell stack including a plurality of battery cells. At least one frame support member is coupled to at least one side (side portion) of the battery cell stack and including a plurality of frame openings. The battery system may further include a plurality of CCU carriers clipped into respective frame openings of the at least one frame support member. The at least one first clip member is in mechanical communication with a spring according to one of the embodiments, so that the first clip member yields (or moves or tilts) in spring action direction in response to compression of the spring during clipping.

According to an embodiment, the carrier member further includes a second clip member which extends in a transversal direction with respect to the spring action direction and is configured to retain a busbar that is coupled to the carrier member.

According to an embodiment, a method of manufacturing a battery system includes a) providing a plurality of CCU carriers. The method includes the step of b) coupling a plurality of busbars to the CCU carrier. The method includes c) providing at least one frame support member including a plurality of frame openings. The method further includes d) clipping the plurality of CCU carriers with the coupled busbars into respective frame openings so that the first clip member yields through the spring action of the spring during the clipping of the CCU carrier into a respective frame opening until arresting in the frame opening of the at least one frame support member. The method further includes the step of e) providing a battery cell stack including a plurality of battery cells. The method further includes the step of f) coupling the at least one frame support member including the clipped plurality of CCU carriers to at least one respective side of the battery cell stack. Thus, an improved assembly process is provided, where the CCU carrier can be clipped into a frame (metal frame) in an easier manner while saving space and, in addition, while proving transversal stiffness in conjunction with a desired spring effect to fixate the busbars in the coupling process.

According to an embodiment, the carrier member further includes a second clip member which extends in a transversal direction with respect to the spring action direction, wherein the coupling of the plurality of busbars to the CCU carrier includes retaining the busbar by the second clip member.

### Specific Embodiments

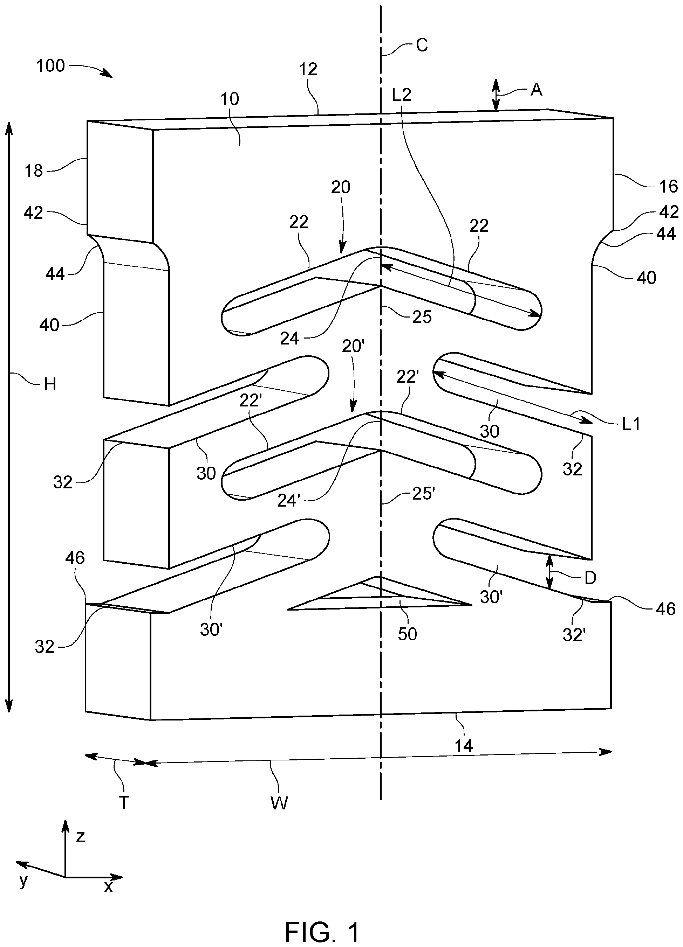

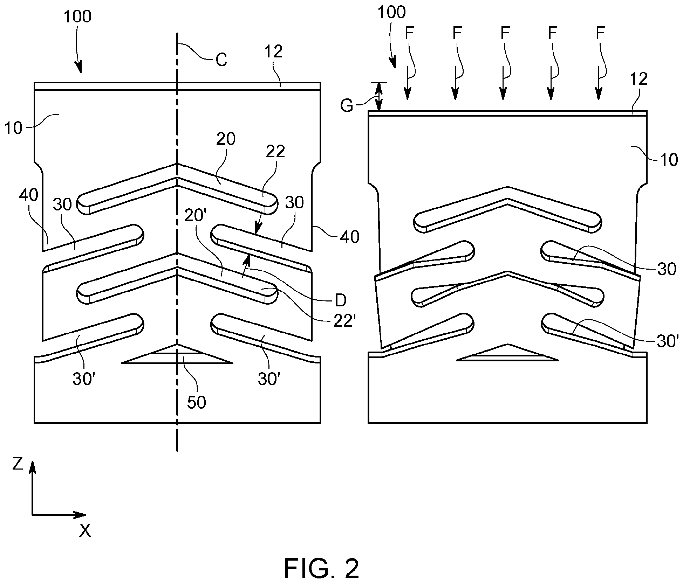

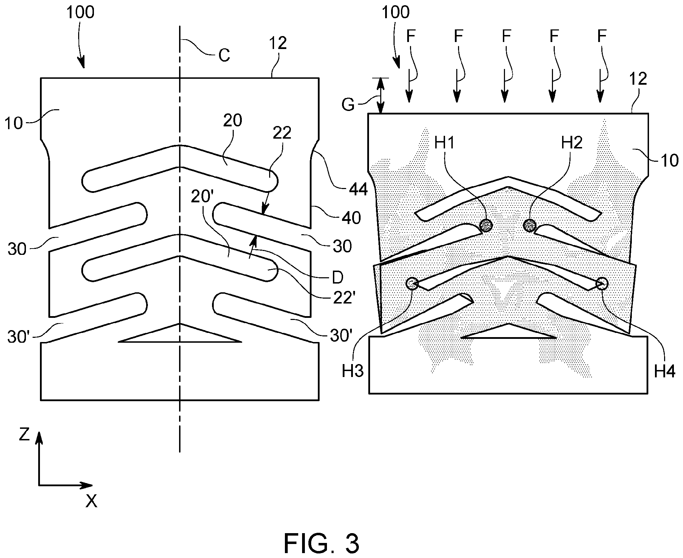

Fig. 1 illustrates a perspective view of a spring 100 according to an embodiment of the disclosure. The response behavior of the spring 100 on a compressive force F is further illustrated in Figs. 2 and 3 as referred to in the following. The spring 100 may be used for a cell contact unit, CCU, carrier as will be described further below.

The spring 100 includes a main body 10. The main body 10 may have a cuboid shape. The main body 10 has a predefined, i.e. predetermined, thickness T (in a y-direction). The main body 10 may be flat or thin. For example, a thickness may be less than a threshold thickness, for example, less than 1 mm, but the invention is not restricted thereto. The main body 10 further may include a rectangular or square top surface area (and bottom surface area) defined by a width W (in an x-direction) and a height H (in a z-direction). The main body 10 may include a plurality of side portions 12, 14, 16, 18. The main body 10 includes a first spring action side portion 12, or first compression portion, and a second spring action side portion 14, or second compression portion, that is opposite to the first spring action side portion 12. The spring action side portions 12, 14 define a spring action direction A in which the spring 100 can be compressed by a compression force F while providing a restoring force in the direction opposite to the compressing force F. A compression force F acting in on the first spring action side portion 12 and the mechanical response of the spring 100 is for example illustrated in Fig. 2 or Fig. 3, see the non-compressed state on left side and a compressed state on the right side.

The main body 10 further includes at least one V-shaped opening 20, 20'. In the present case as illustrated in Fig. 1, two V-shaped openings 20, 20' are provided. In other embodiments, only one V-shaped opening is provided or more than two V-shaped openings depending on the desired application. The V-shaped opening 20, 20' includes a plurality of leg openings 22, 22' penetrating the main body 10 in the thickness direction y of the main body 10. In the present case as illustrated in Fig. 1, two leg openings 22, 22' are provided in each of the two V-shaped openings 20, 20. The leg openings 22, 22' together form the V-shape, wherein the leg openings 22, 22' meet at a tip point (vertex) 24, 24' of the V-shaped opening 20, 20'. The V-shaped opening 20, 20' is oriented so that the leg openings 22, 22' are symmetric with respect to a central axis C of the main body 10. The central axis C is parallel to the spring action direction A. The tip point (vertex) 24, 24' is directed or points to the compression direction F as shown in Fig. 2 or 3. In other examples, the tip point (vertex) may point in the opposite direction of the compression direction F.

Further, the main body 10 includes at least one pair of slot openings 30, 30' which penetrates the main body 10 in the thickness direction y. The at least two slot openings 30, 30' respectively extend from opposite transversal side portions 16, 18 of the main body 10 toward the central axis C. Further, the at least two slot openings 30, 30' respectively extend from opposite transversal side portions 16, 18 of the main body 10 toward the central axis C forming a core portion 25, 25' at the center axis, i.e., where the slot openings 30, 30' are spaced apart from each other.

The spring 100 has excellent flexibility in the spring action direction A allowing for a well-defined compression depth G while maintaining stiffness in the transversal direction x perpendicular to the spring action direction A. The stiffness is achieved due to the V-shaped opening 20, 20' and the slot openings 30, 30' allowing for the flexibility in the case applied compression force F. In addition, the main body 10 may be made of plastic. For example, the main body 10 may be injection-molded. This may increase ease of manufacturing.

Referring to Fig. 2, the compression depth G is indicated in the case of applying a compression force F on the spring 100, here on the first spring action side portion 12. As illustrated therein, the two slot openings 30, 30' reduce their respective diameters D when the main body is compressed. For example, depending on the compression force F, the diameter D may reduce to zero when the inner surfaces of the main body 10 where the slot openings 30, 30' are placed are in contact. The maximum compression depth may thus be proportional to the diameter D, i.e., by the sum of the diameters D of the slot openings 30, 30'. Thus, the dimensions of the slot openings 30, 30' may be used to trim the flexibility according to specific requirements.

Referring to Fig. 3, a force distribution in the spring 100 is determined, by using a Catia simulation, when the spring 100, for example, the first spring action side portion 12, is under a compression force F as indicated in Fig. 3. As can be seen in Fig. 3, only very localized hot spots H1, ... H4 (see the brighter parts) referring to inner tensions occur instead of non-localized (extended) high force regions. Thus, Fig. 3 demonstrates that the forces are uniformly distributed over the spring 100 according to the embodiments of the disclosure.

The least two slot openings 30, 30' may respectively extend in a direction parallel to the leg openings 22, 22' of the at least one V-shaped opening 20, 20'. This provides a more symmetric distribution of thickness in the structure and helps to uniformly distribute the forces in case of the compression force F applied to the spring 100 as can be seen in Fig. 3.

In addition, the at least two slot openings 30, 30' respectively extend to overlap with the respective leg openings 22, 22' when viewed in spring action direction A as shown in Fig. 1. Thus, since the slot openings 30, 30' overlap with leg openings 22, 22', flexibility may be increased so that a desired compression depth D can be reached.

To ensure sufficient flexibility, a length L1 of the at least two slot openings 30, 30' is at least a quarter of the overall width W between the opposite transversal side portions 16, 18 of the main body 10. The length L1 may be adjusted according to desired needs. Further a length L2 of the at least two leg openings 22, 22' may be at least a quarter of an overall with W between the opposite transversal side portions 16, 18 of the main body 10.

The main body 10 further includes a respective recessed portion 40 on the transversal side portions 16, 18. The recessed portion 40 extends in spring action direction A on each transversal side portion 16, 18. The least two slot openings 30, 30' respectively extend toward the central axis C from a slot start portion 32, 32' located within the recessed portion 40. Thus, the recessed portion 40 supports the compression and helps for slight inwards bending as shown in the compressed state of Figs. 2 and 3 providing flexibility of the spring 100 and the deformation of the spring 100.

As can be seen in Fig. 1, an end portion 42 (e.g., first end portion) on the side of the transversal side portions 16, 18 of each recessed portion 40 includes a curved portion 44. This curved portion 44 may facilitate the deformation as shown in Figs. 2 and 3 when a compression force F acts on the spring 100.

Another end portion 46 (e.g., second end portion) of the recessed portion 40 is formed where the slot start portion 32, 32' is located. There a step is generated when viewed along the transversal side portions 16, 18.

In the embodiment of Fig.1, the main body 10 further includes a plurality of V-shaped openings 20, 20' and a plurality of pairs of slot openings 30, 30' which are positioned to alternate in the spring action direction A. In the present example, two V-shaped openings 20, 20' and two pairs of slot openings 30, 30' are provided. Therefore, while stiffness is maintained in transversal direction, a larger compression depth G may be achieved according to the dimensional requirements.

The spring 100 further includes a triangular opening 50 located at the central axis C and oriented symmetric with respect to the central axis C. The triangular opening 50 may point in the same direction as the V-shaped opening 20, 20'. This may be supportive of providing a homogeneous force distribution over the spring 100 when a load is applied thereto.

In summary, according to the various embodiments as described above, a flat spring 100 may be provided with excellent flexibility in spring direction while maintaining stiff in transversal direction.

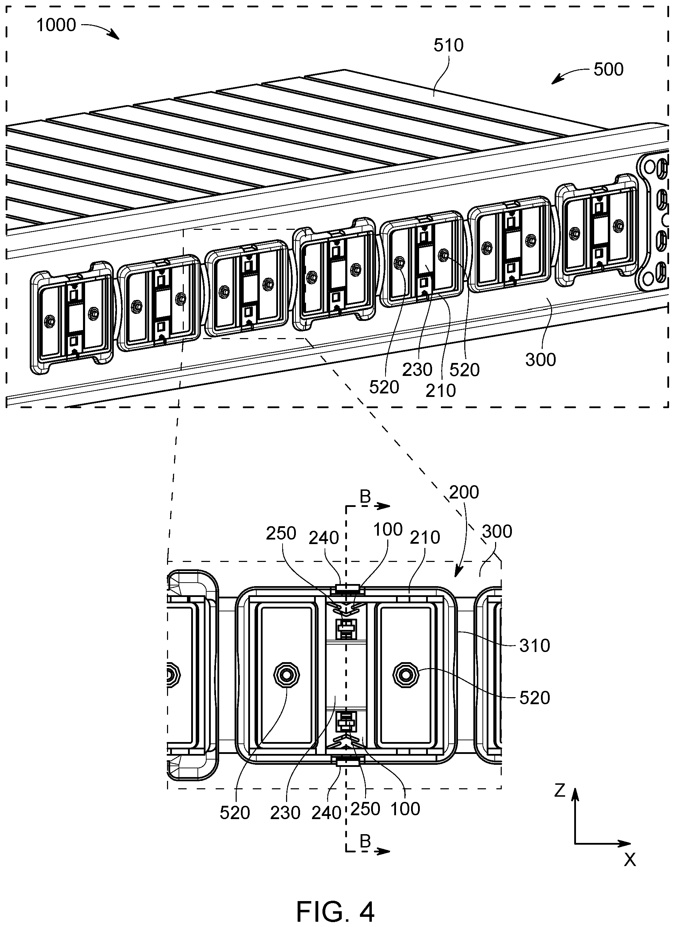

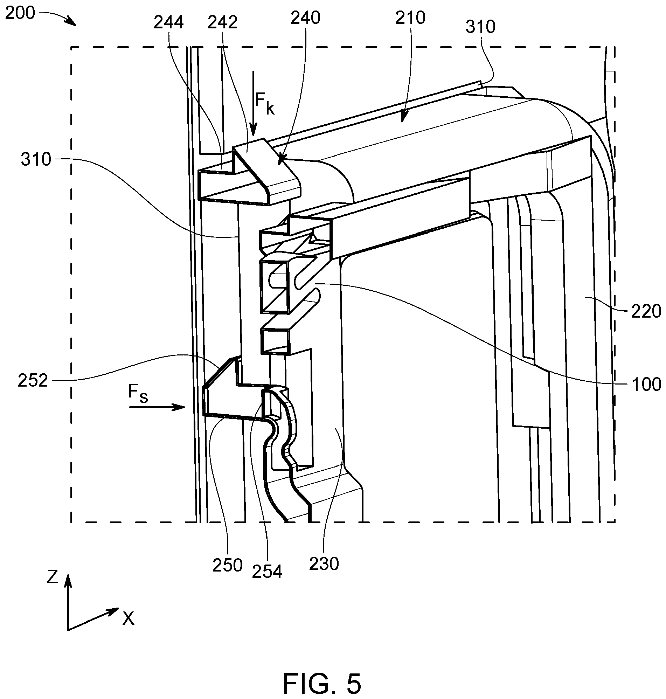

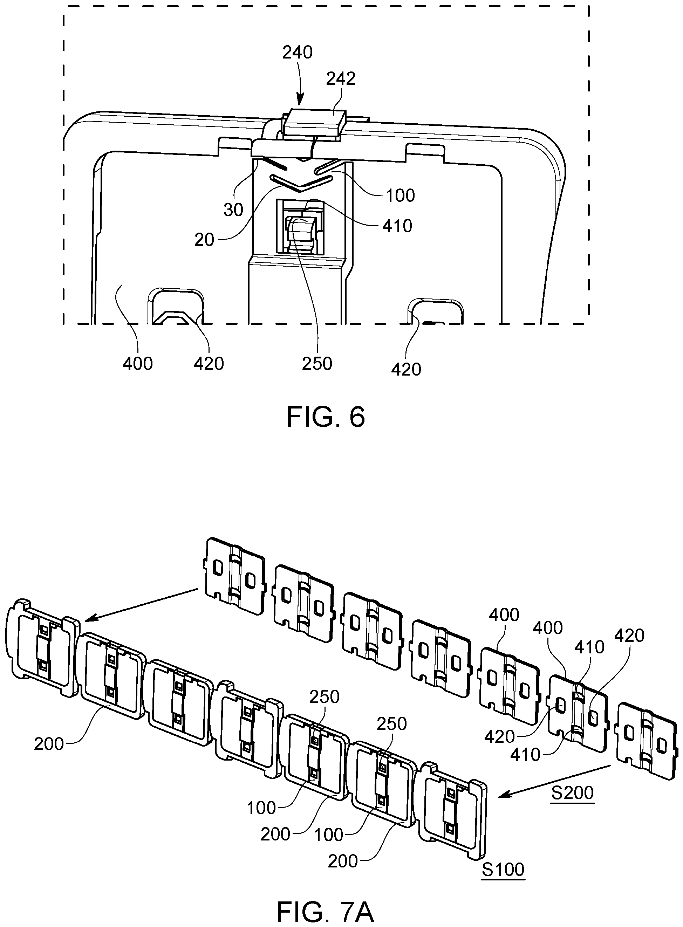

Fig. 4 illustrates a CCU carrier 200 and a battery system 1000 including the CCU carrier 200 according to an embodiment of the invention. Fig. 5 illustrates a cross section when viewed in direction B of the CCU carrier 200 and Fig. 6 includes a busbar 400.

The CCU carrier 200 includes a carrier member 210 which includes at least one spring 100. The at least one spring 100 can be configured as one of the embodiments as described above according to the various embodiments. In the present case, two springs 100 are used.

The carrier member 210 may include a carrier frame portion 220 which forms a surrounding structure defining at least one opening. Furthermore, the carrier member 210 includes a carrier bridge portion 230. The carrier bridge portion 230 connects opposite portions (here an upper portion and a lower portion as example) of the carrier frame portion 220 dividing the opening into a first opening and a second opening. Thus, the carrier member 210 may include two openings separated by the carrier bridge portion 230.

In the present example, the carrier bridge portion 230 may include at least one spring 100, here two springs 100 as example. In other words, the at least one spring 100 is embedded in the carrier bridge portion 230 of the carrier member 210. In this embodiment, the two springs 100 are integral with the carrier bridge portion 230 to form the carrier member 210. Thus, due to the flat geometry of the spring 100, a space efficient inclusion of the spring 100 can be provided.

The carrier member 210 further includes a first clip member 240. In the present example, two first clip members 240 are provided on opposite ends of the carrier member 210. The first clip member 240 is located in mechanical communication with the spring 100 so that the spring 100 causes or supports the first clip member 240 to yield during a clipping, i.e. in the process thereof. Thus, the spring 100 may facilitate or support the first clip member 240 in yielding, i.e. from moving in the spring action direction A, during the clipping.

For example, as shown in the cross section of Figs. 4 and 5, the first clip members 240 are clipped into or with a frame opening 310 of a frame support member 300. In detail, the CCU carrier 200 is clipped into the frame support member 300 from an inside at the point where the force Fₖ acts in the cross section of Fig. 5. That is, due to the excellent flexibility of the spring 100 in the spring action direction A as described above, an improved clipping mechanism is provided. The spring 10 including the V-shaped opening 20, 20' and the slot openings 30, 30' ensure flexibility of the component at the location of the first clip member 240. The first clip members 240 may include a first retention protrusion 242. The first retention protrusion 242 interacts with the boundary of the frame opening 310 and may yield in support by the spring 100. The spring 100 is connected through a first connection member 244. The first retention protrusion 242, may after the clipping is completed, arrest the carrier member 210 in the frame support member 300 once pushed through the frame opening 310, as indicated for example in Fig. 5.

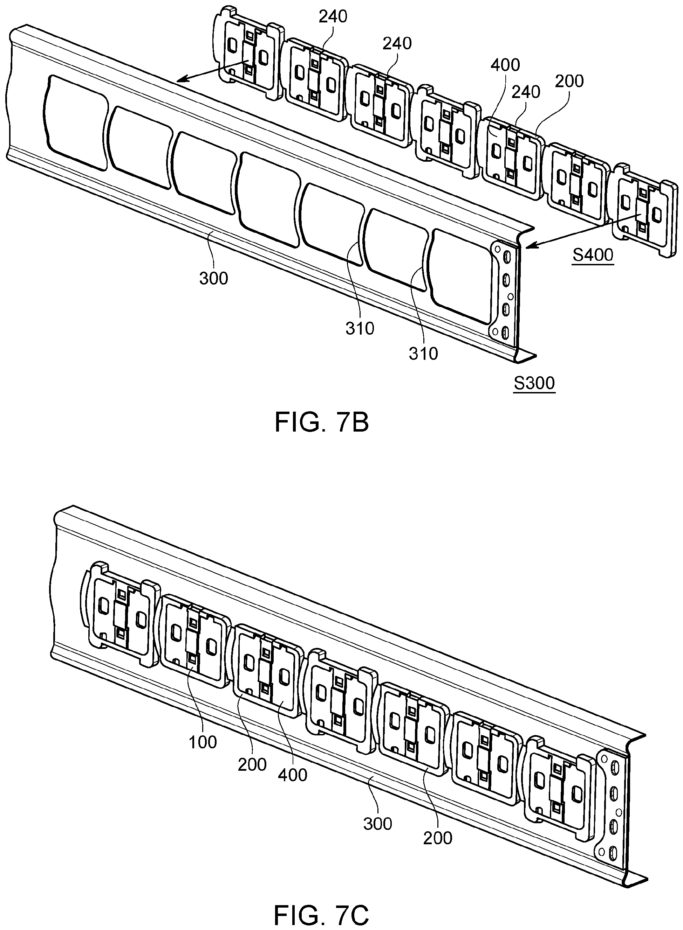

Further, the carrier member 210 may include a second clip member 250. The second clip member 250, as shown in the cross section in Fig. 5, may extend in a transversal direction (opposite of the force Fₛ as indicated in Fig. 5) with respect to the spring action direction A. The second clip member 250 may retain or fixate a busbar 400, see for example Figs. 6 and 7 (A), that is coupled to the carrier member 210. The busbar 400 may include a fixation opening 410 for coupling with the second clip member 250. Thus, since the spring 100 according to the embodiments as described above has a stiffness in transversal direction where the busbar 400 is held or fixated by the second clip member 250 (at the indicated point Fₛ in Fig. 5), even in an event of clipping and thus compressing of the spring 100 (see indication by Fₖ as shown in Fig. 5), the spring 100 may remain stiff to retain or fixate the busbar 400 to be stably held in place. The second clip members 250 may include a second retention protrusion 252. The second retention protrusion 252 may interact with the busbar 400 (not shown in Figs. 4 and 5 but indicated in Fig. 6) may hold the busbar 400 in the carrier member 210, as indicated also for example in Fig. 7 (A) and 7 (B), see the fixation opening 410 provided therein. Second connection members 254, for example bars may connect the second clip member 250 to the carrier bridge portion 230 or carrier member 210.

As can be seen as well in Fig. 4, the battery system 1000 includes a plurality of CCU carriers 200 in accordance with embodiments of the invention. In addition, the battery system 1000 includes a plurality of battery cells 510 forming a battery cell stack 500. The battery cell stack 500 may be framed by the at least one frame support member 300 having the plurality of frame openings 310 as described above.

That is, the battery system 100 includes the plurality of CCU carriers 200 clipped into respective frame openings 310 of the at least one frame support member 300 by a first clip member 240 that is in mechanical communication with the at least one spring 100. The mechanical communication is such that the first clip member 240 may yield, or at least support yielding, through the spring action of the spring 100 in an event of clipping the carrier member 210 into a respective frame opening 310 as described above.

The battery cells 510, or the battery cell stack 500, further include side terminals 520 at a side of the battery cell stack 500. These side terminals 520 are located in the openings formed by the carrier frame portion 220 in the coupled state of the frame support member 300 coupled with the battery cell stack 500. The busbars 400 may include terminal openings 420, see Fig. 7 (A), corresponding to the side terminals 520.

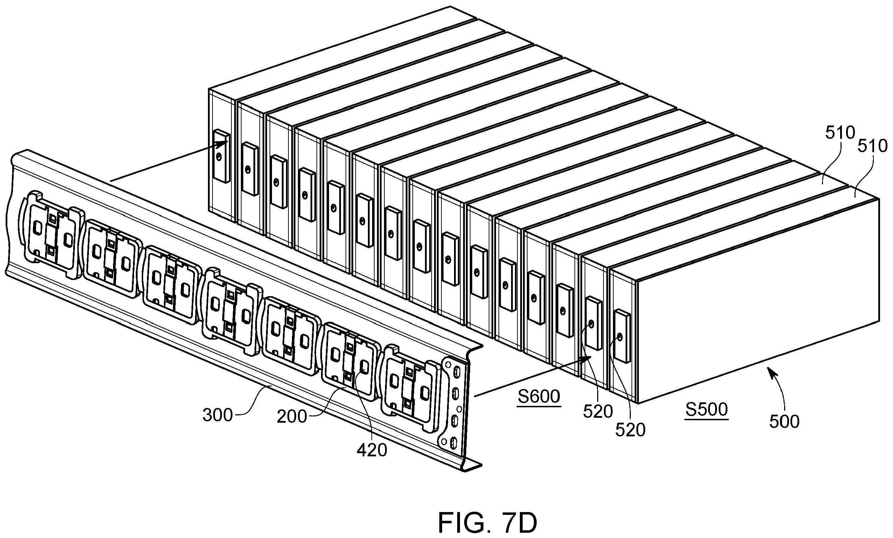

Fig. 7 illustrates a method of manufacturing of the battery system 1000, e.g. according to the embodiments of the disclosure.

As shown in Fig. 7 (A), the method includes the step of providing S100 a plurality of CCU carriers 200. The CCU carriers 200 according to embodiments are described above and the description is incorporated herein by reference. The CCU carriers 200 may be connected with each other or integrally formed.

According to an embodiment and as shown in Fig. 7 (A), a plurality of busbars 400 is coupled S200 to a respective CCU carrier 200. The coupling may, for example, include a step of welding to ensure a stable contact. In addition thereto and in an embodiment, the carrier member 210 of the CCU carrier 200 may further include a second clip member 250, as described above, which extends in a transversal direction with respect to the spring action direction A. The coupling S200 of the plurality of busbars 400 to the CCU carrier 200 may thus include a fixing of the busbars 400 by the second clip member 250 with carrier member 210. The busbars 400 may include fixation openings 410 for coupling the busbars within the carrier member 210. The busbars 400 may further include terminal openings 420, see Fig. 7 (A), corresponding to the side terminals 520

According to an embodiment and as shown in Fig. 7 (B), the method includes the step of providing S300 at least one frame support member 300 including a plurality of frame openings 310. The frame support member 300 may be a metal frame, e.g., a punched metal frame. The frame support member 300 includes a plurality of frame openings 310.

According to an embodiment and as shown in Fig. 7 (B) the method includes a clipping S400 the plurality of CCU carriers 200, having the coupled busbars 400, into the respective frame openings 310, so that the first clip member 240 yields through, or through support of, the spring action of the spring 100 during the clipping of the CCU carrier 200 into the respective frame opening 310 until arresting in the frame opening 310 of the frame support member 300. The result of this clipping action is shown in Fig. 7 (C). Due to the thin spring 100 having excellent flexibility properties in spring action direction A, the coupling process is facilitated. In addition, due to maintaining stiffness in the transversal direction perpendicular to the spring action direction A, the busbars 400 coupled prior thereto are held in place. The stiffness is achieved due to the V-shaped opening 20, 20' and the slot openings 30, 30' allowing for the flexibility in response to compression as in the clipping case according to step S400.

According to an embodiment and as shown in Fig. 7 (D), the method includes the step of providing S500 a battery cell stack 500 including a plurality of battery cells 510. The battery cells may include side terminals 520.

According to an embodiment and as shown in Fig. 7 (D), the method includes the step of coupling S600 the least one frame support member 300 including the clipped plurality of CCU carriers 200 to at least one respective side of the battery cell stack 500. For example, the frame support member 300 may be coupled to sides of the battery cell stack 500 by way of an adhesive, mechanical coupling and/or welding. Thus, a battery system 1000 may be as described above may be obtained.

In summary, a spring 100 is provided having excellent flexibility properties in spring action direction allowing for a well-defined spring compression length while maintaining stiffness in the transversal direction perpendicular to the spring action direction according to various structural features above. As a result, the spring 100 has excellent damping properties with homogeneous force distribution in the direction of the line of action of the force. Further, the spring 100 has an advantage that little space is required, which can be held very flat and thus can be integrated in space saving manner, for example, as being integrated in a CCU carrier 200. Such a spring, i.e. a main body, can be manufactured in an easy (injection) moulding process.

### Reference signs

- 100: spring

- 10: (flat) main body
- 12: first spring action side portion
- 14: second spring action side portion
- 16: first side portion
- 18: second side portion

- 20, 20': V-shaped opening
- 22, 22': leg opening
- 24, 24': tip point (vertex)
- 25, 25': core portion

- 30, 30': slot opening (pair)
- 32, 32': slot start portion

- 40: recessed portion
- 42: first end portion
- 44: curved portion
- 46: second end portion

- 50: triangular opening

- 200: CCU carrier
- 210: carrier member
- 220: carrier frame portion
- 230: carrier bridge portion

- 240: first clip member
- 242: first retention protrusion
- 244: first connection member

- 250: second clip member
- 252: second retention protrusion
- 254: second connection member

- 300: frame support member
- 310: frame opening

- 400: busbar
- 410: fixation opening
- 420: terminal opening

- 500: battery cell stack
- 510: battery cell
- 520: side terminal

- 1000: battery system

- L1: length of slot opening
- L2: length of leg opening
- D: diameter of slot opening
- T: thickness
- W: (overall) width
- H: height

- A: spring action direction
- F: compression force
- G: compression depth
- S100: providing a plurality of CCU carriers
- S200: coupling a plurality of busbars to the CCU carrier
- S300: providing at least one frame support member including a plurality of frame openings
- S400: clipping the plurality of CCU carriers with the coupled busbars into respective frame openings
- S500: providing a battery cell stack including a plurality of battery cells
- S600: coupling the least one frame member to at least one respective side of the battery cell stack

## Claims

1. A spring (100) for a battery system, comprising:
a main body (10) having a predefined thickness (T) and comprising a first spring action side portion (12) and a second spring action side portion (14) opposite to the first spring action side portion (12) defining a spring action direction (A);
wherein the main body (10) comprises at least one V-shaped opening (20, 20') comprising a plurality of leg openings (22, 22') penetrating the main body (10) in a thickness direction (y) of the main body (10), and a pair of slot openings (30, 30') penetrating the main body (10) in the thickness direction (y),
wherein the at least one V-shaped opening (20, 20') is oriented so that the plurality of leg openings (22, 22') are symmetric with respect to a central axis (C) of the main body (10) parallel to the spring action direction (A); and
wherein the pair of slot openings (30, 30') respectively extend from opposite transversal side portions (16, 18) of the main body (10) toward the central axis (C).

2. The spring (100) of claim 1, wherein the pair of slot openings (30, 30') respectively extend in a direction parallel to the plurality of leg openings (22, 22') of the at least one V-shaped opening (20, 20').

3. The spring (100) of claim 2, wherein the pair of slot openings (30, 30') respectively extend to overlap with the respective leg openings (22, 22') when viewed in spring action direction (A).

4. The spring (100) of any one of the claims 1 to 3, wherein a length (L1, L2) of at least one slot opening (30, 30') and/or at least one leg opening (22, 22') is a at least a quarter of an overall with (W) between the opposite side portions (16, 18) of the main body (10).

5. The spring (100) of any one of the claims 1 to 4, wherein the main body (10) further comprises a respective recessed portion (40) on the transversal side portions (16, 18) and extending in spring action direction (A), wherein the pair of slot openings (30, 30') respectively extend toward the central axis (C) from a slot start portion (32, 32') located within the recessed portion (40).

6. The spring (100) of claim 5, wherein an end portion (42) of the recessed portion (40) comprises a curved portion (44).

7. The spring (100) of any one of the claims 5 to 6, wherein another end portion (46) of the recessed portion (40) is formed where the slot start portion (32, 32') is located.

8. The spring (100) of any one of the claims 1 to 7, wherein the main body (10) comprises a plurality of V-shaped openings (20, 20') and a plurality of pairs of slot openings (30, 30') which are positioned to alternate in the spring action direction (A).

9. The spring (100) of any one of the claims 1 to 8, wherein the main body (10) is made of plastic or metal.

10. A CCU carrier (200) for a battery system (1000), comprising:
a carrier member (210) comprising a spring (100) according to any one of the claims 1 to 9,
wherein the carrier member (210) further comprises a first clip member (240) which is in mechanical communication with the spring (100) so that the first clip member (240) yields in the spring action direction (A) in response to compression of the spring (100) during clipping.

11. The CCU carrier (200) according to claim 10, wherein the carrier member (210) further comprises a second clip member (250) which extends in a transversal direction with respect to the spring action direction (A) for retaining a busbar (400) that is coupled to the carrier member (210).

12. A battery system (1000), comprising:
a battery cell stack (500) comprising a plurality of battery cells (510);
at least one frame support member (300) coupled to the battery cell stack comprising a plurality of frame openings (310);
a plurality of CCU carriers (200) clipped into respective frame openings (310) of the at least one frame support member (300) by a first clip member (240) that is in mechanical communication with a spring (100) according to any one of the claims 1 to 9, so that the first clip member (240) yields in spring action direction (A) in response to compression of the spring (100) during clipping.

13. The battery system (1000) of claim 12, wherein the carrier member (210) further comprises a second clip member (250) which extends in a transversal direction with respect to the spring action direction (A) and is configured to retain a busbar (400) that is coupled to the carrier member (210).

14. A method of manufacturing a battery system (1000) of any one of the claims 12 or 13:
a) providing (S100) a plurality of CCU carriers (200) according to claim 10,
b) coupling (S200) a plurality of busbars (400) to the CCU carrier (200),
c) providing (S300) at least one frame support member (300) comprising a plurality of frame openings (310);
d) clipping (S400) the plurality of CCU carriers (200) with the coupled busbars (400) into respective frame openings (310) so that the first clip member (240) yields through the spring action of the spring (100) during the clipping of the CCU carrier (200) into a respective frame opening (310) until arresting in the frame opening (310) of the at least one frame support member (300);
d) providing (S500) a battery cell stack (500) comprising a plurality of battery cells (510); and
e) coupling (S600) the at least one frame support member (300) comprising the clipped plurality of CCU carriers (200) to at least one respective side of the battery cell stack (500).

15. The method of claim 14, wherein the carrier member (210) further comprises a second clip member (250) which extends in a transversal direction with respect to the spring action direction (A), wherein the coupling (S200) of the plurality of busbars (400) to the CCU carrier (200) comprises holding the busbar (400) by the second clip member (250).

## Amended claims

### Amended claims in accordance with Rule 137(2) EPC.

1. A spring (100) for a battery system, comprising:
a main body (10) having a predefined thickness (T) and comprising a first spring action side portion (12) and a second spring action side portion (14) opposite to the first spring action side portion (12) defining a spring action direction (A);
**characterized in that**,
the main body (10) comprises at least one V-shaped opening (20, 20') comprising a plurality of leg openings (22, 22') penetrating the main body (10) in a thickness direction (y) of the main body (10), and a pair of slot openings (30, 30') penetrating the main body (10) in the thickness direction (y),
wherein the at least one V-shaped opening (20, 20') is oriented so that the plurality of leg openings (22, 22') are symmetric with respect to a central axis (C) of the main body (10) parallel to the spring action direction (A); and
wherein the pair of slot openings (30, 30') respectively extend from opposite transversal side portions (16, 18) of the main body (10) toward the central axis (C).

2. The spring (100) of claim 1, wherein the pair of slot openings (30, 30') respectively extend in a direction parallel to the plurality of leg openings (22, 22') of the at least one V-shaped opening (20, 20').

3. The spring (100) of claim 2, wherein the pair of slot openings (30, 30') respectively extend to overlap with the respective leg openings (22, 22') when viewed in spring action direction (A).

4. The spring (100) of any one of the claims 1 to 3, wherein a length (L1, L2) of at least one slot opening (30, 30') and/or at least one leg opening (22, 22') is a at least a quarter of an overall with (W) between the opposite side portions (16, 18) of the main body (10).

5. The spring (100) of any one of the claims 1 to 4, wherein the main body (10) further comprises a respective recessed portion (40) on the transversal side portions (16, 18) and extending in spring action direction (A), wherein the pair of slot openings (30, 30') respectively extend toward the central axis (C) from a slot start portion (32, 32') located within the recessed portion (40).

6. The spring (100) of claim 5, wherein an end portion (42) of the recessed portion (40) comprises a curved portion (44).

7. The spring (100) of any one of the claims 5 to 6, wherein another end portion (46) of the recessed portion (40) is formed where the slot start portion (32, 32') is located.

8. The spring (100) of any one of the claims 1 to 7, wherein the main body (10) comprises a plurality of V-shaped openings (20, 20') and a plurality of pairs of slot openings (30, 30') which are positioned to alternate in the spring action direction (A).

9. The spring (100) of any one of the claims 1 to 8, wherein the main body (10) is made of plastic or metal.

10. A CCU carrier (200) for a battery system (1000), comprising:
a carrier member (210) comprising a spring (100) according to any one of the claims 1 to 9,
wherein the carrier member (210) further comprises a first clip member (240) which is in mechanical communication with the spring (100) so that the first clip member (240) yields in the spring action direction (A) in response to compression of the spring (100) during clipping.

11. The CCU carrier (200) according to claim 10, wherein the carrier member (210) further comprises a second clip member (250) which extends in a transversal direction with respect to the spring action direction (A) for retaining a busbar (400) that is coupled to the carrier member (210).

12. A battery system (1000), comprising:
a battery cell stack (500) comprising a plurality of battery cells (510);
at least one frame support member (300) coupled to the battery cell stack comprising a plurality of frame openings (310);
a plurality of CCU carriers (200) clipped into respective frame openings (310) of the at least one frame support member (300) by a first clip member (240) that is in mechanical communication with a spring (100) according to any one of the claims 1 to 9, so that the first clip member (240) yields in spring action direction (A) in response to compression of the spring (100) during clipping.

13. The battery system (1000) of claim 12, wherein the carrier member (210) further comprises a second clip member (250) which extends in a transversal direction with respect to the spring action direction (A) and is configured to retain a busbar (400) that is coupled to the carrier member (210).

14. A method of manufacturing a battery system (1000) of any one of the claims 12 or 13:
a) providing (S100) a plurality of CCU carriers (200) according to claim 10,
b) coupling (S200) a plurality of busbars (400) to the CCU carrier (200),
c) providing (S300) at least one frame support member (300) comprising a plurality of frame openings (310);
d) clipping (S400) the plurality of CCU carriers (200) with the coupled busbars (400) into respective frame openings (310) so that the first clip member (240) yields through the spring action of the spring (100) during the clipping of the CCU carrier (200) into a respective frame opening (310) until arresting in the frame opening (310) of the at least one frame support member (300);
d) providing (S500) a battery cell stack (500) comprising a plurality of battery cells (510); and
e) coupling (S600) the at least one frame support member (300) comprising the clipped plurality of CCU carriers (200) to at least one respective side of the battery cell stack (500).

15. The method of claim 14, wherein the carrier member (210) further comprises a second clip member (250) which extends in a transversal direction with respect to the spring action direction (A), wherein the coupling (S200) of the plurality of busbars (400) to the CCU carrier (200) comprises holding the busbar (400) by the second clip member (250).
